# EUROPÄISCHE PATENTSCHRIFT

(11) **EP 1 527 216 B1**
(45) Veröffentlichungstag und Bekanntmachung des Hinweises auf die Patenterteilung: **09.07.2008**
(21) Anmeldenummer: 03729851.0
(22) Anmeldetag: 29.04.2003
(51) Int. Cl.: C25D 7/00, C25D 1/00, C25D 1/20, C25D 1/08, C25D 5/02

(54) **VERFAHREN ZUR HERSTELLUNG GALVANISCH ABGESCHIEDENER ANTENNEN FÜR RF-ID-ETIKETTEN MITTELS SELEKTIV EINGEBRACHTEM KLEBER**
METHOD FOR PRODUCING GALVANICALLY DEPOSITED ANTENNAE FOR RFID LABELS USING AN ADHESIVE THAT IS SELECTIVELY APPLIED
PROCEDE DE PRODUCTION D'UNE ANTENNE DEPOSEE GALVANIQUEMENT POUR DES ETIQUETTES D'IDENTIFICATION PAR RADIOFREQUENCE (RFID) AU MOYEN D'UN ADHESIF APPLIQUE SELECTIVEMENT

(30) Priorität: 28.06.2002 DE 10229166
(43) Veröffentlichungstag der Anmeldung: 04.05.2005
(73) Patentinhaber: Qimonda AG, 81739 München (DE)
(72) Erfinder: SCHMID, Günter, 91334 Hemhofen (DE); KLAUK, Hagen, 70195 Stuttgart (DE); HALIK, Marcus, 91058 Erlangen (DE); ZSCHIESCHANG, Ute, 70195 Stuttgart (DE); WEBER, Werner, 80637 München (DE); MÜLLER-HIPPER, Andreas, 93055 Regensburg (DE)
(74) Vertreter: Kottmann, Heinz Dieter
(86) Internationale Anmeldenummer: PCT/DE2003/001376
(87) Internationale Veröffentlichungsnummer: WO 2004/003258

(56) Entgegenhaltungen:
- EP-A- 1 158 074
- EP-A- 1 289 031
- WO-A-00/11749
- US-A- 4 462 873
- PATENT ABSTRACTS OF JAPAN Bd. 1996, Nr. 08, 30. August 1996 (1996-08-30) & JP 8 100288 A (FUKUDA METAL FOIL & POWDER CO LTD), 16. April 1996 (1996-04-16)

## Beschreibung

Die Erfindung betrifft ein Verfahren zur Herstellung einer strukturierten Metallschicht. Derartige strukturierte Metallschichten können beispielsweise als Antennen für RF-ID-Etiketten verwendet werden.

Die moderne Transpondertechnologie ermöglicht ein berührungsloses Auslesen und Speichern von Daten von bzw. auf einem Mikrochip mittels elektromagnetischer Trägerwellen als Transportmedium. Zu diesem Zweck ist der Mikrochip mit einer Antenne verbunden, welche die zum Beschreiben oder Lesen des Mikrochips erforderliche elektromagnetische Strahlung empfängt bzw. sendet. Über eine externe Sende- oder Empfangseinheit kann dann mit dem Mikrochip kommuniziert werden. Im Allgemeinen verfügt der Mikrochip nicht über eine eigene Energieversorgung, so dass die zum Beschreiben oder Auslesen des Mikrochips verwendete elektromagnetische Strahlung auch zur Energieversorgung des Mikrochips verwendet wird. Die Herstellung der die Antenne und den Mikrochip umfassenden RF-ID-Etiketten war bisher jedoch relativ teuer. Aus diesem Grund ist die Transpondertechnologie bisher nur für verhältnismäßig wertvolle oder langlebige Artikel eingesetzt worden. So wird die Transpondertechnologie beispielsweise zum Auffinden von vergrabenen Pipelines verwendet oder zum schnellen Erfassen von Tieren in großen Herden.

So werden beispielsweise in großen Rinderherden den Tieren ein Mikrochip unter die Haut implantiert. Werden diese Tiere an einer Sende- bzw. Empfangsstation vorbeigetrieben, so können die entsprechend präparierten Rinder durch die auf dem Mikrochip gespeicherten Daten problemlos identifiziert werden, da die Daten berührungslos ausgelesen werden. Neben dieser Anwendung sind auch andere Einsatzgebiete denkbar, wie beispielsweise die Kontrolle und Beobachtung von vom Aussterben bedrohter Tierarten in der freien Wildbahn zu Forschungszwecken oder Verhaltensstudien, da die entsprechenden Untersuchungen ohne eine größere Störung der Umgebung des Tieres ablaufen können.

Daneben gibt es weitere Anwendungsgebiete, wie beispielsweise die elektronische Diebstahlsicherung von teuren Luxusgütern wie Pelzmänteln, Parfums, CD-ROMs etc. Dabei muss der Einzelhandel jedoch mit entsprechenden Einrichtungen zum Auslesen der Mikrochips ausgestattet sein.

Die Transpondertechnologie wurde bislang vor allem für Güter eingesetzt, die sehr langlebig oder sehr hochwertig sind. Eine Einführung der Transpondertechnologie auf breiter Basis wurde dabei durch die vergleichsweise hohen Kosten verhindert. Lassen sich die Kosten für die Herstellung des RF-ID-Etiketts drastisch senken, öffnet dies den Weg zu einer Vielzahl von Anwendungen, die unter einem hohen Kostendruck stehen.

So lässt sich an eine zu bürokratischen Zwecken dienliche Anwendung denken, wie beispielsweise die Überwachung von wichtigen Dokumenten und Aktenbeständen in Regierungs- oder Verwaltungsgebäuden, wobei die Akte an den einzelnen Bearbeitungsstationen elektronisch erfasst wird. Der Weg der Akte kann dann auf einfachem Weg verfolgt und die Akte bei Bedarf leicht wieder aufgefunden werden. Im einfachsten Fall wird hierzu die entsprechende Sende- oder Empfangsstation im Türrahmen angebracht, so dass die Akte elektronisch erfasst wird, wenn sie in das Zimmer hinein oder heraus gereicht wird.

Ein weiteres Anwendungsbeispiel ist die Verwaltung und Verladung von Gepäckstücken auf Flughäfen, Häfen oder Bahnhöfen oder anderen Güterumverteilungsstationen, wobei das Gepäckstück zielgerichtet zu einem bestimmten Ort geleitet werden muss. Dabei gilt ein Stückpreis für ein RF-ID-Etikett, das einen Speicherchip sowie eine Sende- bzw. Empfangseinheit umfasst, von 0,50 EURO für diese Anwendungen gerade noch als rentabel.

Ein großes Interesse an einer Variante dieser Technologie besteht auf einer Vielzahl von Gebieten, auf denen in kurzen Zeiträumen eine beträchtliche Zahl von Daten sicher erfasst werden sollen. Hierzu lassen sich eine Vielzahl von Beispielen aus dem Alltag finden, wie beispielsweise die elektronische Briefmarke oder die Verwendung elektronischer Etiketten zur Auszeichnung von Waren im Einzelhandel. In diesem Fall kann die in einem Einkaufswagen befindlichen Ware an einer elektronischen Kasse berührungslos erfasst und eine Rechnung über diese Güter erstellt werden. Ferner eröffnet sich dadurch auch die Möglichkeit der weiteren Übermittlung der Daten an die Lagerhaltung und einer automatischen Nachbestellung der verkauften Waren.

Die angesprochenen Konsum- und Verbrauchsartikel weisen im allgemeinen jedoch einen Marktwert von lediglich einigen wenigen EURO auf, so dass um eine marktgerechte Einführung zu ermöglichen, die Kosten für die elektronischen Etiketten erheblich gesenkt werden müssen. In diesem Zusammenhang wird über eine Kostengrenze von etwa 0,05 EURO pro Etikett diskutiert.

Um die Herstellungskosten eines RF-ID-Etiketts senken zu können, stehen verschiedene Ansatzpunkte zur Verfügung. Es können die Kosten für den Mikrochip gesenkt werden, zum anderen aber auch die Kosten, die für die Sende- und Empfangseinheit, insbesondere die Antennenstruktur aufzubringen sind.

Als Antennenstruktur wird in Karten, wie sie beispielsweise für die Regelung des Zugangs zu sensiblen Bereichen in Forschungseinrichtungen oder Produktionsstätten verwendet werden, eine einfache Drahtspule verwendet. Für die oben beschriebenen Anwendungen ist diese Form der Antennenstruktur jedoch bei weitem zu teuer. Daneben sind auch Antennen bekannt, welche aus Metallfolien gefertigt sind, wobei in diesem Fall zunächst die Antennenstruktur hergestellt wird, um diese dann anschließend auf einen separaten Träger aufzubringen.

Die Antennenstruktur kann dabei durch verschiedene Arbeitstechniken hergestellt werden.

Eine Möglichkeit besteht darin, eine Metallfolie vollflächig auf den Träger zu laminieren und anschließend durch selektives Ätzen substraktiv zu strukturieren. Die Antennenstruktur kann aber auch zunächstaus einer Metallfolie ausgestanzt und anschließend auf den Träger laminiert werden.

Bei diesen Verfahren wird die Antennenstruktur subtraktiv erzeugt, d.h. es wird zunächst eine vollflächige Kupferschicht erzeugt, die anschließend strukturiert werden muss. Dabei entsteht eine erhebliche Menge an Kupferabfall, der zurückgewonnen werden muss.

Soll die Bereitstellung makroskopischer Ausgangsmaterialien wegen der aufwendigen Verarbeitung vermieden werden, so kann die Antennenstruktur auch unter Verwendung elektrisch leitfähiger Pasten auf den Träger gedruckt oder gesprüht werden. Dazu muss das Kupfer jedoch zunächst entsprechend aufbereitet werden. Das Kupfer muss in ausreichend kleine Partikel zerkleinert werden, um eine druckfähige Paste herstellen zu können. Ausserdem müssen entsprechende Begleitsubstanzen, wie Binder oder Lösemittel hinzugefügt werden.

Schließlich bietet sich auch eine aus der Halbleitertechnik bekannte Technologie an, wobei auf den Träger, beispielsweise unter Verwendung eines Fotolacks, zunächst fotolithografisch eine Maske definiert wird. Anschließend werden die nicht durch die Maske bedeckten Zwischenräume auf dem Träger stromlos metallisiert. Das Verfahren benötigt also Arbeitsschritte, in denen der Fotolack aufgetragen und strukturiert wird. Ferner fallen Kosten für den Fotolack selbst an. Auch dieses Verfahren ist daher nicht für die kostengünstige Herstellung von Antennenstrukturen für RF-ID-Etiketten geeignet.

Bei herkömmlichen Verfahren zur Herstellung von Kupferschichten ist es bislang üblich, die Kupferschichten durch eine galvanische Abscheidung auf einer als Kathode geschalteten Edelstahltrommel zu erzeugen. Die Haftung von Kupfer auf Edelstahl ist relativ gering, so dass die erzeugte Kupferfolie einfach von der Edelstahlmatrix abgelöst und im weiteren Verfahren auf einen entsprechenden Träger laminiert werden kann. Um die Ablösung des Kupfers von der Edelstahlmatrix zu erleichtern, können auf die Edelstahltrommel zunächst Zusatzstoffe, wie beispielsweise Graphit oder Molybdänsulfid aufgetragen werden, welche die Haftung des Kupfers auf der Edelstahlfläche weiter erniedrigen.

Entscheidend für eine möglichst kostengünstige Verarbeitung ist weiterhin, dass das abzuscheidende Kupfermaterial möglichst effizient auf der Kathode abgeschieden wird. Für die zur Diskussion stehende RF-ID-Etiketten werden pro Exemplar etwa 100 mg Kupfer benötigt. Das heißt, mit einer Materialmenge von 1 kg Kupfer können bei effizienter Herstellungsweise in etwa 10.000 Antennen hergestellt werden.
Bei den weiter oben beschriebenen subtraktiven Strukturierungsverfahren muss jedoch der als Verschnitt anfallende Kupferabfall im Kreis geführt werden, da der Preis für Kupfer relativ hoch ist.

Aufgabe der Erfindung ist es deshalb, ein Verfahren zur Herstellung einer strukturierten Metallschicht, wie sie beispielsweise als Antennenstruktur in RF-ID-Etiketten verwendet wird, zur Verfügung zu stellen, das einfach und preiswert durchgeführt werden kann.

Die Aufgabe wird gelöst durch ein Verfahren zur Herstellung einer strukturierten Metallschicht nach Anspruch 1.

Durch die auf der Kathode vorgegebene Maskenstruktur wird bei der galvanischen Abscheidung des Substratmetalls bereits die gewünschte Struktur der Metallschicht erhalten. Die Metallschicht muss also nicht nachträglich strukturiert werden und es fällt folglich auch kein Verschnitt des Abfalls an. Die auf der Kathode definierte Maskenstruktur wird in einer Dicke ausgeführt, die zumindest der Schichtdicke der zu erzeugenden Metallschicht entspricht. Die Bedingungen für die galvanische Abscheidung werden so gewählt, dass selektiv nur das Substratmetall abgeschieden wird und die strukturierte Metallschicht in der gewünschten Schichtdicke hergestellt wird, also beispielsweise keine Überfüllung der durch die Maskenstruktur vorgegebenen Bereiche erfolgt. Das Substratmetall liegt im Elektrolyt in ionischer Form vor und wird an der Kathode zum Substratmetall reduziert.

Nach der galvanischen Abscheidung wird die strukturierte Metallschicht, z.B. eine Antennenstruktur für ein RF-ID-Etikett, direkt auf die gewünschte Trägerschicht übertragen.

Weitere Transfer-, Druck- und Ätzkosten entfallen. Der Preis für die Herstellung einer Antennenstruktur für RF-ID-Etiketten, wird beim erfindungsgemäßen Verfahren im Wesentlichen nur durch die reinen Materialkosten bestimmt und ermöglicht daher eine kostengünstige Produktion bei hohen Stückzahlen.

In einer bevorzugten Ausführungsform des erfindungsgemäßen Verfahrens weist die Kathode eine zylinderförmige Geometrie auf. Die Kathode liegt also beispielsweise in Form einer Walze, Trommel oder Rollen vor. Mit einer solchen Kathode lässt sich das erfindungsgemäße Verfahren kontinuierlich durchführen. Die zylinderförmige Kathode wird mit ihrem unteren Abschnitt in den Elektrolyten getaucht und kontinuierlich gedreht. Ein bestimmter Abschnitt der Umfangsfläche tritt also in den Elektrolyten ein und wird durch diesen hindurch bewegt. Dabei scheidet sich das Substratmetall auf den leitenden Bereichen des Abschnitts ab. Die Rotationsgeschwindigkeit des Zylinders wird so eingestellt, dass der Abschnitt der Umfangsfläche solange im Elektrolyten verbleibt, dass sich die strukturierte Metallschicht in der gewünschten Schichtdicke abscheidet. Der Abschnitt der Umfangsfläche wird durch weitere Rotation des Zylinders wieder aus dem Elektrolyt herausbewegt. Der Umfangsfläche wird nun kontinuierlich eine Trägerschicht zugeführt, so dass die auf dem Abschnitt der Umfangsfläche abgeschiedene strukturierte Metallschicht auf die Trägerschicht übertragen wird. Durch weitere Rotation der zylinderförmigen Kathode wird der Abschnitt der Umfangsfläche erneut in den Elektrolyten eingetaucht und der Zyklus beginnt erneut.

Die stetige Abscheidung der Kupferschicht und die stetige Übertragung der abgeschiedenen strukturierten Metallschicht auf die Trägerschicht ermöglicht somit eine kontinuierliche Arbeitsweise. Dadurch entfallen die bei einem unstetigen Verfahren zwangsläufig anfallenden Totzeiten, wodurch eine Steigerung des Durchsatzes ermöglicht wird.

Es ist vorteilhaft, wenn zumindest die leitenden Bereiche der Kathode aus Edelstahl aufgebaut sind. Edelstahl verfügt zum einen über eine ausreichend hohe Leitfähigkeit und ist zum anderen ausreichend korrosionsbeständig. Die hohe Leitfähigkeit des Edelstahl ermöglicht eine effiziente Abscheidung des Substratmetalls. Durch die Korrosionsbeständigkeit von Edelstahl erhalten die Kathoden eine hohe Lebensdauer auch unter extremen galvanischen Bedingungen. Ein Austausch der Kathode ist daher relativ selten erforderlich. Dadurch erhöht sich die Standzeit und der Nutzungsgrad der zur galvanischen Abscheidung des Substratmetalls verwendeten Vorrichtung.
Ferner kann Edelstahl relativ kostengünstig hergestellt und verarbeitet werden, wodurch auch für die Erzeugung der entsprechenden Kathodentrommeln der finanzielle Aufwand in einem beschränkten Rahmen bleibt.

Es ist weiterhin vorteilhaft, wenn die nicht leitenden Bereiche auf der Oberfläche der Kathode aus einem Kunststoff und/oder einer Keramik bestehen. Diese Werkstoffe sind zum einen sehr preisgünstig und weisen darüberhinaus einen hohen spezifischen Widerstand auf. Durch den hohen spezifischen Widerstand ergibt sich eine scharfe Konturierung der Maskenstruktur gegenüber den leitfähigen Bereichen. Keramiken und Kunststoffe können mittlerweile sehr günstig hergestellt werden und zeigen ein gutes Verformbarkeitspotential, wodurch sich eine mögliche Anwendung auf verschiedenste Kathodengeometrien ergibt. Ein weiterer Vorteil ist auch die verhältnismäßig geringe Dichte dieser Materialien die eine Gewichtsersparnis und eine einfache Transportfähigkeit der eingesetzten Kathodenobjekte zur Folge hat.

In einer bevorzugten Ausführungsform des erfindungsgemäßen Verfahrens weisen die leitenden Bereiche der Kathodenoberfläche die Form einer Antennenstruktur auf. Das erfindungsgemäße Verfahren ermöglicht die äußerst kostengünstige Herstellung von Antennenstrukturen für RF-ID-Etiketten. Damit können die Kosten für die Herstellung solcher RF-ID-Etiketten wesentlich gesenkt werden, so dass diese auch für Anwendungen eingesetzt werden können, die unter einem hohen Kostendruck stehen.

Bevorzugt enthält die Anode das Substratmetall. Die Anode wirkt dann neben ihrer Eigenschaft als Ladungspol auch als Reservoir für das Substratmetall. Somit entfällt in diesem Fall die sonst erforderliche kontinuierliche Zuführung des Substratmetalls in den Elektrolyt. Eine aufwendige Aufbereitung des Substratmetalls entfällt, da das Substratmetall auch als ungereinigtes Rohmetall eingesetzt werden kann. Die Selektivität für die Abscheidung erfolgt dabei über eine geeignete Spannungsdifferenz zwischen Anode und Kathode. Auf diese Weise können störende bzw. auch schädliche oder giftige Zwischenprodukte bei der Herstellung der Antennenstruktur vermieden werden. Ferner können die während der elektrochemischen Abscheidung anfallenden Anodenschlämme zur Gewinnung wertvoller Edelmetalle verwendet werden und zur Reduzierung der Gesamtkosten beitragen. Diese Metalle sind elektrochemisch betrachtet edler als das Substratmetall, und verfügen demnach über ein höheres Oxidationspotential.

Vorteilhaft ist es, wenn das Substratmetall Kupfer ist. Kupfer verfügt über eine sehr hohe Leitfähigkeit und ist relativ preisgünstig zu erwerben. Der Preis für Kupfer beträgt derzeit etwa 1,8 EURO/kg. Die hohe Leitfähigkeit von Kupfer wird nur von sehr wenigen Metallen übertroffen, wobei diese Metalle in den Anschaffungskosten wesentlich teurer sind. Das Verhältnis von Leitfähigkeit zu Preis ist bei Kupfer optimal. Eine hohe Leitfähigkeit des Substratmetalls garantiert eine hohe Effizienz der Energieeinkopplung der elektromagnetischen Strahlung in die Antennenstruktur und somit einen hohen Wirkungsgrad für den Informationsaustausch. Gleichzeitig sind die Ansprechzeiten relativ kurz und somit lässt sich ein hoher Informationsfluss bei geringer Störanfälligkeit erreichen.

Die Abscheidung des Substratmetalls wird so gesteuert, dass die Schichtdicke der strukturierten Metallschicht geringer ist als die Tiefe der Maskenstruktur, so dass ein Restvolumen ausgebildet wird. Unter einem Restvolumen wird der Raum verstanden, der zwischen einer Ebene, die durch die Oberfläche der nichtleitenden Bereiche der Maskenstruktur und der freiliegenden Oberfläche der abgeschiedenen strukturierten Metallschicht definiert ist. Die Schichtdicke der strukturierten Metallschicht kann dabei über die angelegte Stromdichte oder auch über die Verweilzeit der Kathode bzw. der leitenden Abschnitte der Maskenstruktur im Elektrolyten geregelt werden.
Somit lassen sich mit der gleichen Abscheidevorrichtung bei geringem Aufwand verschiedene Schichtdicken realisieren. In das gebildete Restvolumen können verschiedene Hilfsmaterialien eingefüllt werden.

In das Restvolumen wird ein Klebstoff auf die strukturierte Metallschicht aufgebracht.

Durch den Klebstoff kann die strukturierte Metallschicht einfach aus der Maskenstruktur entnommen werden, da eine ausreichende Haftung zur Trägerschicht erzeugt wird. Weiter erfolgt durch den Klebstoff eine dauerhafte Fixierung der strukturierten Metallschicht, bevorzugt einer Antennenstruktur, auf der Trägerschicht.

Der Klebstoff wird bevorzugt so ausgewählt, dass er auf der abgeschiedenen strukturierten Metallschicht haftet, jedoch nicht auf den nicht leitenden Bereichen der Maskenstruktur. Nach dem Auftragen des Klebstoffs und dem Aufbringen der Trägerschicht lässt sich diese mit der darauf fixierten strukturierten Metallschicht dann ohne weiteres wieder abheben. Ferner sollten die Klebstoffe keine giftigen Begleitsubstanzen enthalten, um eine Gefährdung der Umwelt zu vermeiden.

Besonders vorteilhaft ist es, wenn der Klebstoff ein thermoplastischer Klebstoff oder ein Reaktionsklebstoff ist. Als Reaktionsklebstoff kann beispielsweise ein thermisch oder ein fotochemisch härtbarer Klebstoff verwendet werden. Beispiele für Reaktionsklebstoffe sind Polyethersulfone, Cyanurate, Epoxyverbindungen und ähnliche Verbindungsklassen. Voraussetzung ist dabei, dass die entsprechenden Klebstoffe eine feste Verbindung zwischen der strukturierten Metallschicht und der Trägerschicht ermöglichen, dabei jedoch die Struktur der strukturierten Metallschicht bezüglich Oberfläche und Formstabilität nicht beeinträchtigen.

Wird Kupfer als Substratmetall verwendet, so ist es vorteilhaft, wenn der Elektrolyt Schwefelsäure und als kupferhaltiges Salz Kupfersulfat enthält. Schwefelsäure erhöht wegen ihres hohen Dissoziationsgrades die Leitfähigkeit des Elektrolyten und verbessert die Abscheidequalität der Kupferschicht. Kupfersulfat weist eine hohe Löslichkeit in wässrigen Systemen auf, so dass eine relativ hohe Kupferionenkonzentration im Elektrolyten erreicht werden kann.

Darüberhinaus können im Elektrolyten noch weitere optimierende Zusätze wie Triisopropanolamin, Gelatine, Glue, Thioharnstoff, Zellulose-Ether oder Chloridionen zu dem Elektrolyten hinzugefügt werden. Die Wirkung dieser Zusätze besteht dabei entweder in einer Verbesserung der fluidynamischen Eigenschaften der Elektrolytlösung (z.B. Erhöhung der Viskosität) oder einer Erhöhung der Leitfähigkeit, die zu einer Verbesserung der Abscheidequalität führt. Zu den leitfähigkeitsverbessernden Zusätzen zählen beispielsweise Kupferfluoroboratelektrolyte (z.B. Kupfer (II) tetrafluoroborat, Borflusssäure, Borsäure).

Für die Kupferabscheidung hat sich eine Badtemperatur von bis zu 75°C, Strömungsgeschwindigkeiten von bis zu 7 m/s bei einer Stromdichte von bis zu 150 A/dm² als geeignet erwiesen.

Nach dem Transfer der als Antennenstruktur ausgebildeten strukturierten Metallschicht auf die Trägerschicht kann die Antennenstruktur durch einen Mikrochip zu einem RF-ID-Etikett ergänzt werden.

Die Erfindung wird unter Bezugnahme auf die beigefügten Figuren näher erläutert, dabei zeigt:
- Fig. 1:: eine schematische Darstellung der Prozessfolge zur Herstellung einer Antennenstruktur auf einer Trägerschicht
- Fig. 2:: eine vergrößerte Ansicht einer Schattenmaske für die Herstellung einer Antennenstruktur;
- Fig. 3:: ein Radiofrequenz-Identifikationsetikett nach dem Stand der Technik;
- Fig. 4:: eine schematische Darstellung einer Anlage zur Herstellung der Antennenstrukturen für RF-ID Etiketten (isolierende Maskenstruktur als fixierte Kathodenbeschichtung ausgestaltet)
- Fig. 5:: eine schematische Darstellung einer Anlage zur Herstellung der Antennenstrukturen für RF-ID-Etiketten (isolierende Maskenstruktur als flexible Folie ausgestaltet)

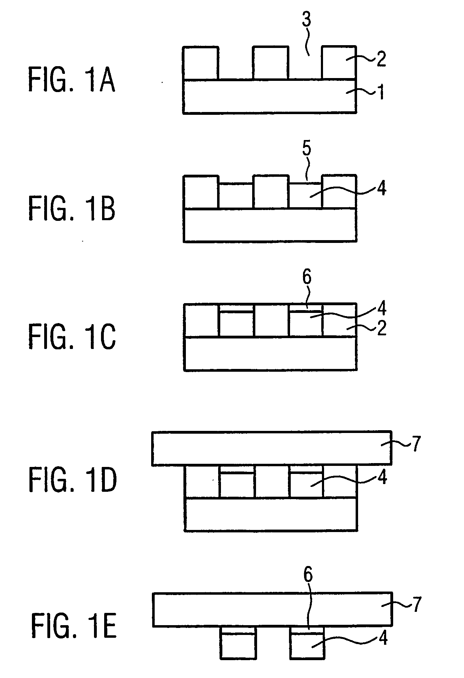

Fig. 1 zeigt schematische Arbeitsschritte, die bei der Herstellung einer Antennenstruktur während des erfindungsgemäßen Verfahrens durchlaufen werden. Zunächst wird, wie in Fig. 1a dargestellt, eine Kathode 1 bereitgestellt, auf deren Oberseite stegförmige Abschnitte 2 angeordnet sind. Die stegförmigen Abschnitte 2 bestehen aus einem elektrisch nicht leitenden Material. Dadurch werden auf der Oberfläche der Kathode 1 im Bereich der stegförmigen Abschnitte 2 elektrisch nichtleitende Bereiche und in den Abschnitten 3, in denen die Kathode 1 freiliegt, elektrisch leitende Bereiche definiert. Die Struktur der Abschnitte 3 entspricht der Struktur der strukturierten Metallschicht, beispielsweise einer Antennenstruktur. Die Abschnitte 3 bilden Gräben, die seitlich jeweils durch die stegförmigen Abschnitte 2 begrenzt werden. Die Flanken der in Fig. 1a im Querschnitt dargestellten stegförmigen Abschnitte 2 verlaufen im gezeigten Ausführungsbeispiel senkrecht zur Oberfläche der Kathode 1. Es ist jedoch auch möglich, die als Gräben ausgestalteten Abschnitte 3 in der Form auszuführen, dass die Gräben sich in Richtung auf die Oberfläche der Kathode 1 verjüngen, so dass nach der Abscheidung eines Metalls die in den Abschnitten 3 ausgebildete strukturierte Metallschicht leichter aus den Gräben herausgelöst werden kann. In die Abschnitte 3 einer auf der Kathode 1 aufgebrachten Maskenstruktur wird nun galvanisch ein Substratmetall 4, z.B. Kupfer abgeschieden. Dabei wird die galvanische Abscheidung so durchgeführt, dass die in den Abschnitten 3 ausgebildeten Gräben nicht vollständig mit dem Substratmetall 4 ausgefüllt werden, so dass, wie in Fig. 1b dargestellt, im oberen Abschnitt der Gräben ein Restvolumen 5 verbleibt. Auf Schicht 4 des Substratmetalls wird im verbleibenden Restvolumen 5 ein Kleber 6 eingebracht. Der Kleber 6 füllt dabei das Restvolumen 5 vollständig aus. Im in der Fig. 1c dargestellten Querschnitt werden nur die vom Restvolumen 5 gebildeten Abschnitte vom Kleber 6 ausgefüllt. Die oberen Flächen der stegförmigen Abschnitte 2 bleiben vom Kleber unbedeckt. Im Prinzip kann auch auf die oberen Fläche der stegförmigen Abschnitte 2 ein Kleber eingetragen werden. Wichtig ist jedoch, dass der Kleber auf dem Material der stegförmigen Abschnitte 2 nicht oder nur in sehr geringem Ausmaß haftet.

Auf die Oberfläche der in Fig. 1c dargestellten Struktur wird nur, wie in Fig. 1d dargestellt eine Trägerschicht 7 aufgelegt und gegebenfalls angepresst. Dabei gelangt der Kleber 6 mit der Oberfläche der Trägerschicht 7 in Kontakt und haftet an dieser fest. Wird die Trägerschicht 7 abgehoben, werden auch die Abschnitte des abgeschiedenen Substratmetalls 7 mit abgehoben, so dass wie in Fig. 1e dargestellt, eine Trägerschicht 7 erhalten wird, auf deren Oberfläche Stege aus einem elektrisch leitfähigen Substratmetall 4, z.B. Kupfer, durch einen Kleber 6 fixiert sind. Die Stege 4 entsprechen beispielsweise den Windungen einer Antennenstruktur.

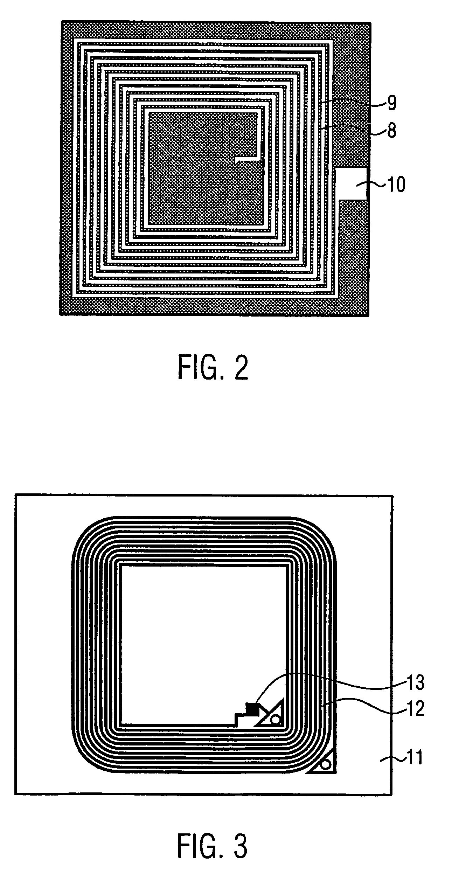

Fig. 2 zeigt eine Maskenstruktur in Aufsicht, die zur Herstellung der Antenntenstruktur im erfindungsgemäßen Verfahren auf einer Kathode aufgebracht wird. Die Maskenstruktur umfasst elektrisch nichtleitende Bereiche 8 z.B. aus Kunststoff/Keramik, die in der Fig. 2 schwarz dargestellt sind. Elektrisch nichtleitende Bereiche 8 der Maskenstruktur begrenzen Abschnitte 9, in welcher die Kathode freiliegt. Diese Abschnitte 9 bilden eine Struktur, die den darzustellenden Windungen der Antenne entspricht. In den Abschnitten 9 wird im galvanischen Verfahren das Substratmetall abgeschieden. Die Maskenstruktur stellt also eine Negativstruktur der herzustellenden Antenne dar. Auf der quadratischen Elektrodenfläche 10 kann nach der Herstellung der Antenne ein Mikrochip mit Hilfe eines elektrisch leitfähigen Klebers aufgeklebt werden.

Fig. 3 zeigt ein Radiofrequenz-Identifikationsetikett. Auf einer flexiblen Folie 11, die als Trägerschicht dient, ist eine aus mehreren Windungen aufgebaute Antennenstruktur 12 aufgebracht. Die Enden der Antennenstruktur 12 sind leitend mit einem Silizium-Mikrochip 13 verbunden. Die Trägerschicht 11 kann auf ihrer Rückseite mit einer Kleberschicht versehen sein, um das Etikett auf einem zu kennzeichnenden Gegenstand, beispielsweise einer Akte, befestigen zu können. Die Antennenstruktur 12 wird zunächst mit dem oben beschriebenen Verfahren galvanisch hergestellt und anschließend auf die Folie 11 übertragen.

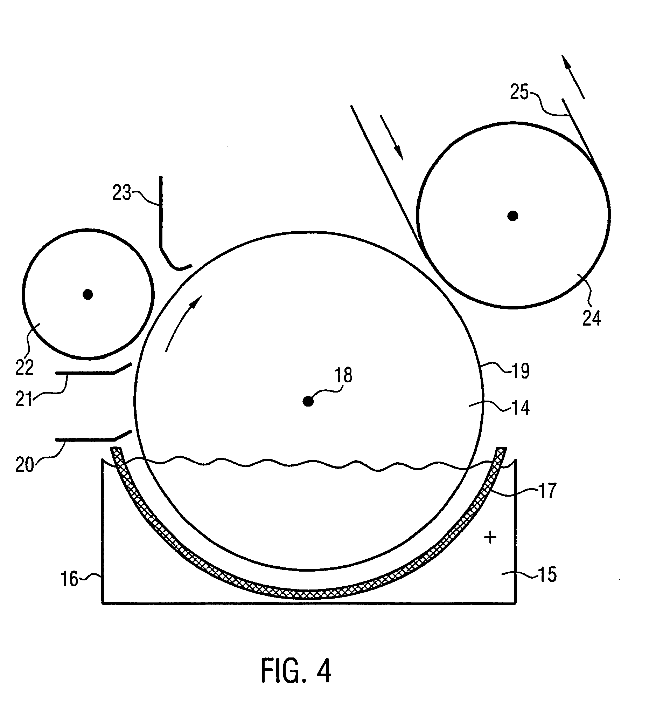

Fig. 4 zeigt schematisch einen Schnitt durch eine Vorrichtung zur galvanischen Abscheidung von Antennenstrukturen für RF-ID-Etiketten. Auf der Umfangsfläche 19 einer Edelstahltrommel 14 ist eine Maskenstruktur aus Kunststoff oder Keramik (nicht dargestellt) angeordnet. In den Bereichen, in denen die Antennenstruktur ausgebildet werden soll, liegt die Umfangsfläche 19 der Edelstahltrommel 14 frei. Die Edelstahltrommel 14 ist so in einem mit einem Elektrolyten 15 gefüllten Bad 16 eingetaucht, dass nur der untere Abschnitt der Edelstahltrommel 14 in den Elektrolyten 15 eintaucht. Im Bad 16 befindet sich weiter eine Hohlkopfelektrode 17, die als Anode wirkt. Die Hohlkopfelektrode 17 besteht aus Rohkupfer. Die Edelstahltrommel 14 ist mit ihrer Achse 18 drehbar gelagert, so dass durch Rotation der Edelstahltrommel 14 deren Umfangsfläche 19 kontinuierlich durch den Elektrolyten 15 geführt wird. Die Rotationsgeschwindigkeit der Edelstahltrommel 14 wird so eingestellt, dass ein bestimmter Abschnitt auf der Umfangsfläche 19 der Edelstahltrommel 14 für etwa 1 - 2 Minuten im Elektrolyten verweilt bzw. wie zur Abscheidung der gewünschten Schichtdicke erforderlich ist. Zwischen der als Kathode wirkenden Edelstahltrommel 14 und der als Anode wirkenden Hohlkopfelektrode 17 wird nun eine geeignete Spannung angelegt, so dass Kupfer an der Hohlkopfelektrode 17 in Lösung geht und auf den elektrisch leitfähigen freiliegenden Abschnitten der Edelstahltrommel 14 das Kupfer abgeschieden wird. Z.B. beträgt bei einer Stromdichte von 100 A/dm² und einem Wirkungsgrad von 70% die Abscheiderate 9 µm/min. Dabei kann die Verweilzeit der Kathode im Elektrolyten 15 durch die Umdrehungsgeschwindigkeit der Edelstahltrommel 14 kontrolliert werden. Die Zusammensetzung des Elektrolyten ist so gewählt, dass hohe Stromdichten bis 150 A/dm² angewendet werden können. Anodenschlämme, die sich während des Prozesses abscheiden, werden der Edelmetallverarbeitung zugeführt.

Um z.B. eine 10 µm dicke Kupferschicht abzuscheiden, wird die Tiefe der Maskenstruktur zu 10.5 µm gewählt. Die durch die isolierende Maskenstruktur freigegebenen Flächen werden galvanisch mit einer 10 µm dicken Kupferschicht beschichtet. In der verbleibenden Resttiefe von 0.5 µm wird dann der Kleber wie in einem Tiefdruckverfahren eingebracht. Ein bestimmter Abschnitt auf der Umfangsfläche 19 wird also durch Rotation der Edelstahltrommel 14 in den Elektrolyten 15 hineingeführt und durch diesen hindurch bewegt. Dabei wird auf den elektrisch leitfähigen freiliegenden Bereichen kontinuierlich Kupfer abgeschieden, bis durch eine weitere Rotation der Edelstahltrommel 14 dieser Abschnitt wieder aus dem Elektrolyten 15 herausbewegt wird. Dabei wird die Abscheidung des Kupfers so eingestellt, dass in den elektrisch leitenden Bereichen noch ein Restvolumen für den Kleber verbleibt. Nach dem der Abschnitt der Umfangsfläche 19 der Edelstahltrommel 14 aus dem Elektrolyten 15 herausgeführt wurde, wird er zunächst an einer Spülvorrichtung 20 und einer Trockenvorrichtung 21 vorbeigeführt. Anschließend wird mit einer mit einem Kleber versehenen Walze 22 ein Kleber auf die Umfangsfläche 19 der Edelstahltrommel 14 aufgebracht. Überschüssiger Kleber wird durch eine Abstreifvorrichtung 23 entfernt, so dass der Kleber im Wesentlichen nur in den Restvolumina auf dem zuvor abgeschiedenen Kupfer verbleibt. Der mit dem Kleber versehene Abschnitt der Umfangsfläche 19 wird durch Rotation der Edelstahltrommel 14 weiterbewegt und gelangt zu einer Druckwalze 24. Über die Druckwalze 24 wird eine Trägerschicht 25, beispielsweise eine Papier- oder Kunststoffolienbahn, der Umfangsfläche 19 zugeführt und an dieser angepresst. Die mit der Klebeschicht versehene Antennenstruktur wird von der Umfangsfläche 19 auf die Trägerschicht 25 übertragen. Die Trägerschicht 25 mit der auf dieser aufgebrachten Antennenstruktur (nicht dargestellt) wird durch die Druckwalze 24 kontinuierlich abtransportiert.

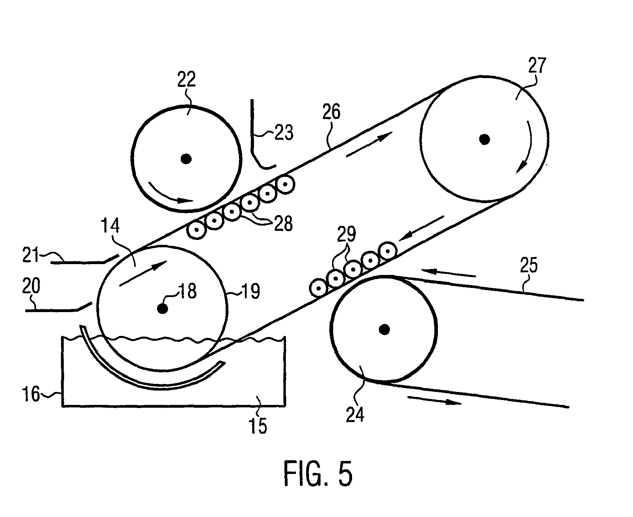

Fig. 5 zeigt als Querschnitt eine Vorrichtung bei der zur Durchführung des erfindungsgemäßen Verfahrens weitere Freiheitsgrade ausgebildet sind. Die Maskenstruktur auf der als Kathode ausgebildeten Edelstahltrommel 14 wird hierbei durch ein umlaufendes strukturiertes Band 26 erzeugt. Wie bei Fig. 4 erläutert, ist eine Edelstahltrommel 14 so angeordnet, dass bei Rotation um ihre Achse 18 die Umfangsfläche 19 durch einen Elektrolyten 15 bewegt wird. Dabei wird, wie oben erläutert, eine strukturierte Metallschicht in den freiliegenden elektrisch leitfähigen Bereichen auf der Umfangsfläche 19 der Edelstahltrommel 14 abgeschieden. Um diese freiliegenden Abschnitte zu definieren, läuft ein Band 26 um die Umfangsfläche 19 der Edelstahltrommel 14. in das Band 26 sind Öffnungen eingebracht, die der darzustellenden Antennenstruktur entsprechen. Das Band 26 weist eine Dicke auf, die etwas größer als die Dicke der darzustellenden Antennenstruktur ist, um ein Restvolumen für den auf die Antennenstruktur aufzubringenden Kleber zu erhalten. Das Band 26 läuft kontinuierlich zwischen der Edelstahltrommel 14 und der Umlenktrommel 27 um. Zur Verbesserung der Abdichtung zwischen Trommel und Band sind magnetisierbare Partikel in das Band 26 eingearbeitet. In die Edelstahltrommel 14 werden Magneten integriert. Durch die magnetische Wechselwirkung liegt das Band eng an der Trommel an. Nach der galvanischen Abscheidung der Antennenstruktur wird die Oberfläche des Bandes 26 zunächst mit der Spülvorrichtung 20 gespült und mit der Trockenvorrichtung 21 getrocknet. Bei einer weiteren Rotation der Edelstahltrommel 14 wird das Band 26 zusammen mit der abgeschiedenen Antennenstruktur von der Umfangsfläche 19 abgehoben. Das Band 26 wird einer Walze 22 zugeführt, mit welcher der Kleber auf die Oberfläche des Bandes 26 aufgebracht wird. Damit das Band 26 gut an der Umfangsfläche der Walze 22 anliegt, sind auf der gegenüberliegenden Seite des Bandes 26 Stützwalzen 28 vorgesehen, durch welche das Band 26 an die Walze 22 angepresst wird. Überschüssiger Kleber wird anschließend mit einem Abstreifer 23 entfernt. Nach Umlaufen der Umlenktrommel 27 gelangt das Band 26 zu einer Druckwalze 24, über welche kontinuierlich eine Trägerschicht 25 der Oberfläche des Bandes 26 zugeführt wird. Um das Band mit ausreichendem Druck gegen die Druckrolle 24 zu pressen, sind auf der gegenüberliegenden Seite des Bandes 26 Stützrollen 29 vorgesehen. Durch den Kleber haftet die dargestellte Antennenstruktur an der Oberfläche der Trägerschicht 25 und wird aus dem Band 26 herausgetrennt und auf die Trägerschicht 25 übertragen. Die Trägerschicht 25 mit der auf dieser angeordneten Antennenstruktur (nicht dargestellt) wird durch Rotation der Druckwalze 24 kontinuierlich abgeführt. Das Band 26 wird erneut der Edelstahltrommel 11 zugeführt, so dass eine weitere Antennenstruktur hergestellt werden kann.

In die Gesamtanlage können weitere Hilfsvorrichtungen eingebaut werden, um das Ausheben der Antennenstrukturen aus dem strukturierten Band zu erleichtern.

### Bezugszeichenliste

- 1: Kathode
- 2: Stege
- 3: leitende Abschnitte
- 4: Substratmetall
- 5: Restvolumen
- 6: Kleber
- 7: Trägerschicht
- 8: nichtleitende Bereiche
- 9: Abschnitte
- 10: quadratische Elektrodenfläche
- 11: flexible Folie
- 12: Antennenstruktur
- 13: Silizium-Mikrochip
- 14: Edelstahltrommel
- 15: Elektrolyt
- 16: Bad
- 17: Hohlkopfelektrode
- 18: Achse
- 19: Umfangsfläche
- 20: Spülvorrichtung
- 21: Trockenvorrichtung
- 22: Walze
- 23: Abstreifvorrichtung
- 24: Druckwalze
- 25: Trägerschicht
- 26: Band
- 27: Umlenktrommel
- 28: Stützwalzen
- 29: Stützrollen

## Patentansprüche

1. Verfahren zur Herstellung einer strukturierten Metallschicht, umfassend zumindest die folgenden Schritte:
- Bereitstellen einer Kathode (1), wobei auf der Oberfläche der Kathode (1) leitende und nicht leitende Bereiche definiert sind, die eine Maskenstruktur bilden und einer Anode, wobei Kathode und Anode in einem Elektrolyten angeordnet sind, der ein Substratmetall enthält;
- Anlegen einer Spannung zwischen Kathode und Anode;
- Abscheidung des Substratmetalls (4) auf die leitenden Bereiche der Kathode (1);
- Bereitstellen einer Trägerschicht (7) und in Kontakt Bringen der Trägerschicht (7) mit der Oberfläche der Kathode (1);
- Übertragen des auf die Kathode abgeschiedenen Substratmetalls (4) auf die Trägerschicht (7), wobei die strukturierte Metallschicht erhalten wird,
**dadurch gekennzeichnet,**
**dass** die Abscheidung des Substratmetalls so gesteuert wird, dass die Schichtdicke der strukturierten Metallschicht geringer ist als die Tiefe der Maskenstruktur, so dass ein Restvolumen ausgebildet wird, und
ein Klebstoff (6) in das Restvolumen auf die strukturierte Metallschicht aufgebracht wird.

2. Verfahren nach Anspruch 1, wobei die Kathode eine zylinderförmige Geometrie aufweist.

3. Verfahren nach Anspruch 1 oder 2, wobei die leitenden Bereiche der Kathode (1) aus Edelstahl aufgebaut sind.

4. Verfahren nach einem der Ansprüche 1 bis 3, wobei die nicht leitenden Bereiche der Kathode aus einem Kunststoff und/oder einer Keramik bestehen.

5. Verfahren nach einem der Ansprüche 1 bis 4, wobei die leitenden Bereiche der Kathodenoberfläche in Form einer Antennenstruktur angeordnet sind.

6. Verfahren nach einem der Ansprüche 1 bis 5, wobei die Anode das Substratmetall enthält.

7. Verfahren nach Anspruch 6, wobei das Substratmetall Kupfer ist.

8. Verfahren nach einem der Ansprüche 1 bis 7, wobei der Klebstoff (6) ein thermoplastischer Klebstoff oder ein Reaktionsklebstoff ist.

9. Verfahren nach einem der Ansprüche 1 bis 8, wobei der Elektrolyt Schwefelsäure und Kupfersulfat enthält.

10. Verfahren nach einem der Ansprüche 1 bis 9, wobei nach dem Übertragen des auf die Kathode abgeschiedenen Substratmetalls auf die Trägerschicht (7) die strukturierte Metallschicht durch einen Mikrochip zu einem RF-ID-Etikett ergänzt wird.

## Claims

1. Method of producing a structured metal layer, comprising at least the following steps:
- provision of a cathode (1), conducting and nonconducting regions which form a mask structure being defined on the surface of the cathode (1), and of an anode, the cathode and the anode being arranged in an electrolyte which contains a substrate metal;
- application of a voltage between the cathode and the anode;
- depositing of the substrate metal (4) onto the conducting regions of the cathode (1);
- provision of a carrier layer (7) and bringing the carrier layer (7) into contact with the surface of the cathode;
- transfer of the substrate metal (4) deposited onto the cathode to the carrier layer (7), the structured metal layer being obtained,
**characterized in that** the depositing of the substrate metal is controlled in such a way that the layer thickness of the structured metal layer is less than the depth of the mask structure, so that a residual volume is formed, and
an adhesive (6) is applied to the structured metal layer in the residual volume.

2. Method according to Claim 1, the cathode having a cylindrical geometry.

3. Method according to Claim 1 or 2, the conducting regions of the cathode (1) being constructed from high-grade steel.

4. Method according to one of Claims 1 to 3, the nonconducting regions of the cathode consisting of a plastic and/or a ceramic.

5. Method according to one of Claims 1 to 4, the conducting regions of the cathode surface being arranged in the form of an antenna structure.

6. Method according to one of Claims 1 to 5, the anode containing the substrate metal.

7. Method according to Claim 6, the substrate metal being copper.

8. Method according to one of Claims 1 to 7, the adhesive (6) being a thermoplastic adhesive or a reaction adhesive.

9. Method according to one of Claims 1 to 8, the electrolyte containing sulfuric acid and copper sulfate.

10. Method according to one of Claims 1 to 9, the structured metal layer being supplemented by a microchip to form an RF ID tag after the transfer of the substrate metal deposited onto the cathode to the carrier layer (7).

## Revendications

1. Procédé de production d'une couche métallique structurée, comprenant au moins les stades suivants :
- on se procure une cathode (1), des zones conductrices et non conductrices qui forment une structure de masque étant définies à la surface de la cathode (1), et une anode, la cathode et l'anode étant disposées dans un électrolyte qui contient un métal de substrat ;
- on applique une tension entre la cathode et l'anode ;
- on dépose le métal (4) de substrat sur les parties conductrices de la cathode (1) ;
- on se procure une couche (7) support et on met la couche (7) support en contact avec la surface de la cathode (1) ;
- on transfère le métal de substrat déposé sur la cathode à la couche (7) support, en obtenant la couche de métal structurée,
**caractérisé**
**en ce que** l'on règle le dépôt du métal de substrat de façon à ce que l'épaisseur de la couche de métal structurée soit plus petite que la profondeur de la structure du masque, de manière à former un volume restant, et
on dépose une colle (6) dans le volume restant sur la couche de métal structurée.

2. Procédé suivant la revendication 1, dans lequel la cathode a une géométrie de forme cylindrique.

3. Procédé suivant la revendication 1 ou 2, dans lequel les zones conductrices de la cathode (1) sont en acier fin.

4. Procédé suivant l'une des revendications 1 à 3, dans lequel les zones non conductrices de la cathode sont en une matière plastique et/ou en une céramique.

5. Procédé suivant l'une des revendications 1 à 4, dans lequel on dispose les parties conductrices à la surface de la cathode sous la forme d'une structure d'antenne.

6. Procédé suivant l'une des revendications 1 à 5, dans lequel l'anode contient le métal de substrat.

7. Procédé suivant la revendication 6, dans lequel le métal de substrat est du cuivre.

8. Procédé suivant l'une des revendications 1 à 7, dans lequel la colle (6) est une colle thermoplastique ou une colle réactive.

9. Procédé suivant l'une des revendications 1 à 8, dans lequel l'électrolyte contient de l'acide sulfurique et du sulfate de cuivre.

10. Procédé suivant l'une des revendications 1 à 9, dans lequel, après le transfert du métal de substrat déposé sur la cathode à la couche (7) de support, on complète la couche de métal structurée par une micropuce en une étiquette RF-ID.
